# EUROPEAN PATENT APPLICATION

(11) **EP 2 053 517 A2**
(43) Date of publication of application: **29.04.2009**
(21) Application number: 08165109.3
(22) Date of filing: 25.09.2008
(51) Int. Cl.: G06F 12/02

(54) **Method and apparatus for managing a memory for storing potentially configurable entries in a list**

(30) Priority: 25.10.2007 US 978101
(71) Applicant: Mitel Networks Corporation, Ottawa, ON K2K 2W7 (CA)
(72) Inventor: Erb, Paul Andrew, Ottawa Ontario K1N 6M5 (CA); Conner, Michael James, Kanata Ontario K2K 3M3 (CA)
(74) Representative: Pisani, Diana Jean

(57) **Abstract**

A method and apparatus for managing a memory for storing potentially configurable entries in a list, associated with a resource coupled to a central resource manager, is provided. A number of potentially configurable entries in the list are determined. A block of memory for storing data associated with each potentially configurable entry is allocated from the memory. If the block of memory is insufficient for storing the data, at least one extended block of memory is allocated from the memory, for storing the data.

## Description

### Field of Invention

The specification relates generally to centralized management of electronic resources, and specifically to a method and apparatus for managing a memory for storing potentially configurable entries in a list.

### Background of the Invention

In a centrally managed telephone system, for example for a building, a company, a campus, including hosted services (e.g. CENTREX), and the like, telephone devices, including virtual telephone devices, are managed via a server, for example a PBX (Private Branch Exchange), which stores data associated with each of the devices. The deployment of devices with large numbers of programmable keys consumes a significant amount of system resources, regardless of the actual configuration of each device, wherein the configuration data associated with the keys is centrally stored, for example, at the server. These keys may be physically available on a device, virtually available by paging, or may be virtual keys on a virtual device. As a result of the generally deployed common device configuration model, the amount of memory allocated for storing data for each device is the same, necessitating an allocation of system memory for each device similar to the amount of memory required by the most complex device in the system. For example, a device that has only one programmable key is allocated the same amount of system memory as a device with 48 programmable keys. Further the device with 48 programmable keys is assigned an amount of system memory that allows all 48 keys to be configured, regardless of the actual number of keys that are configured. While this approach allows for fully populated deployment with all programmable keys available to be configured on all available devices, as systems scale to larger numbers of devices, and support is introduced for more programmable keys on the devices, the considerable system memory which is required impacts the overall performance of the system.

Furthermore, the introduction of hot desk users increases the system memory allocated to programmable keys because each hot desk user is configured using the largest number of programmable keys available to any device, regardless of the device onto which they are hot desking.

While engineering guidelines may be imposed on deployment to ensure that sufficient system resources are available, this may result in devices with large number of keys being limited as to the number of keys which may be configured. Alternatively, flexible system dimensioning allows memory to be deallocated from some features in the system, which may then be used for device configuration. In any event, performance of the system or the devices is decreased.

### Summary of the Invention

A first broad aspect of an embodiment seeks to provide a method of managing a memory for storing potentially configurable entries in a list associated with a resource coupled to a central resource manager. The method comprises: determining a number of potentially configurable entries in the list; allocating a block of memory for storing data associated with each potentially configurable entry, the block of memory allocated from the memory; and if the block of memory is insufficient for storing the data, allocating at least one extended block of memory, from the memory, for storing the data. In some of these embodiments, the method further comprises de-allocating the at least one extended block of memory in the memory if a total number of potentially configurable entries decreases and, consequently, the at least one extended block of memory is no longer required to store the data. In other embodiments, the method further comprises allocating at least one additional extended block of memory from the memory for storing the data, if a total number of potentially configurable entries increases and, consequently, the at least one extended block of memory is no longer sufficient to store the data.

In some embodiments of the first broad aspect, the method further comprises configuring at least one of the potentially configurable entries. In some of these embodiments, configuring at least one potentially configurable entry comprises storing an indication of programming data in association with the at least one potentially configurable entry. In some embodiments, the indication of programming data comprises the programming data. In other embodiments, the indication of programming data comprises a reference number, the reference number stored in association with the programming data. In some of these embodiments, the method further comprises retrieving the programming data using the reference number.

In some embodiments the method further comprises retrieving the programming data in response to receiving a notification that a key associated with an entry in the list has been activated at the resource, and processing the programming data. In some of these embodiments, processing programming data comprises transmitting the programming data to the resource for processing.

A second broad aspect of an embodiment seeks to provide a central resource manager for managing potentially configurable entries in a list associated with a resource coupled to the central resource manager. The central resource manager comprises a memory for storing the potentially configurable entries in the list. The central resource manager further comprises a processing unit enabled for: determining a number of potentially configurable entries in the list; allocating a block of memory for storing data associated with each potentially configurable entry, the block of memory allocated from the memory; and if the block of memory is insufficient for storing the data, allocating at least one extended block of memory, from the memory, for storing the data. In some embodiments, the processor is further enabled for de-allocating the at least one extended block of memory in the memory if a total number of potentially configurable entries decreases and, consequently, the at least one extended block of memory is no longer required to store the data. In other embodiments, the processor is further enabled for allocating at least one additional extended block of memory from the memory, for storing the data, if a total number of potentially configurable entries increases and, consequently, the at least one extended block of memory is no longer sufficient to store the data. In yet further embodiments, the processor is further enabled for configuring at least one of the potentially configurable entries. In some of these embodiments, configuring at least one of the potentially configurable entries comprises storing an indication of programming data in association with the at least one potentially configurable entry in the memory. In some embodiments, the indication of programming data comprises the programming data. In other embodiments, the indication of programming data comprises a reference number, the reference number stored in association with the programming data. In some of these embodiments, the processor further is enabled for retrieving the programming data using the reference number.

In some embodiments, the processor is further enabled for retrieving the programming data in response to receiving a notification that a key associated with an entry in the list has been activated at the resource, and processing the programming data. In some of these embodiments, processing programming data comprises transmitting the programming data to the resource for processing.

### Brief Description of the Drawings

Embodiments are described with reference to the following figures, in which:

Fig. 1 depicts a system for managing a memory for storing potentially configurable entries in a list, according to a non-limiting embodiment;

Fig. 2A depicts a block diagram of components of a human-machine interface of a resource, according to a non-limiting embodiment;

Fig. 2B depicts a block diagram of communication and processing components of a resource according to a non-limiting embodiment;

Fig. 3 depicts a method for managing a memory for storing potentially configurable entries in a list, according to a non-limiting embodiment;

Fig. 4 depicts various lists used for managing a memory for storing potentially configurable entries in a list, according to a non-limiting embodiment; and

Fig. 5 depicts a list used for managing a memory for storing potentially configurable entries in a list, according to a non-limiting embodiment.

### Detailed Description

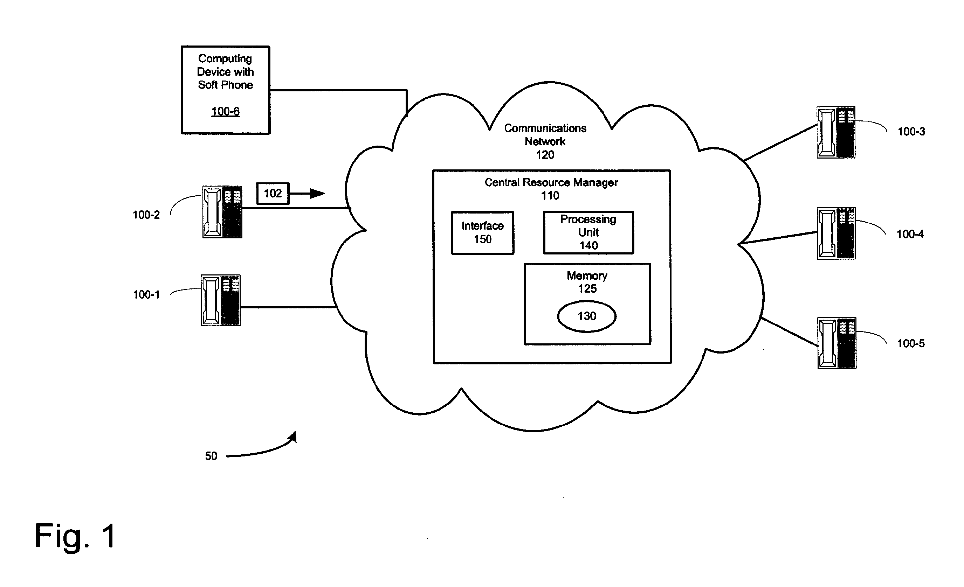

Referring now to Figure 1, a centrally managed telephone system is indicated generally at 50. The system 50 is characterized by a plurality of user accessible resources 100-1, 100-2...100-6 (generically, a resource 100, and collectively, resources 100) which are coupled to a central resource manager 110 located in a communications network 120. In general the central resource manager 110 is configured to manage a memory 125 for storing potentially configurable entries in a list 130 associated with a resource 100, via a processing unit 140. The central resource manager 110 is in communication with the resources 100 via an interface 150, which is configured for wired or wireless communication, as desired.

The central resource manager 110 is generally compatible with the communications network 120. Similarly, the resources 100 are adapted to communicate over the communication network 120. For example, if the communications network 120 comprises a packet based network (e.g. the Internet), the central resource manager 110 and the resources 100 are adapted to communicate via packets. Similarly, if the communications network 120 comprises the PSTN, the central resource manager 110 and the resources 100 are enabled to communicate via circuit switching. In some embodiments, the communications network 120 may comprise a combination of a packet based network and the PSTN, and some resources 100 may be enabled to communicate via the PSTN and other resources 100 may be enabled to communicate via packets, as desired, the central resource manager 110 enabled for communication via both packets and the PSTN. Furthermore, the communications network 120 may be a wired or wireless network as desired; correspondingly, the resources 100 and the central resource manager 110 may be enabled to communicate in a wired or wireless manner, as desired.

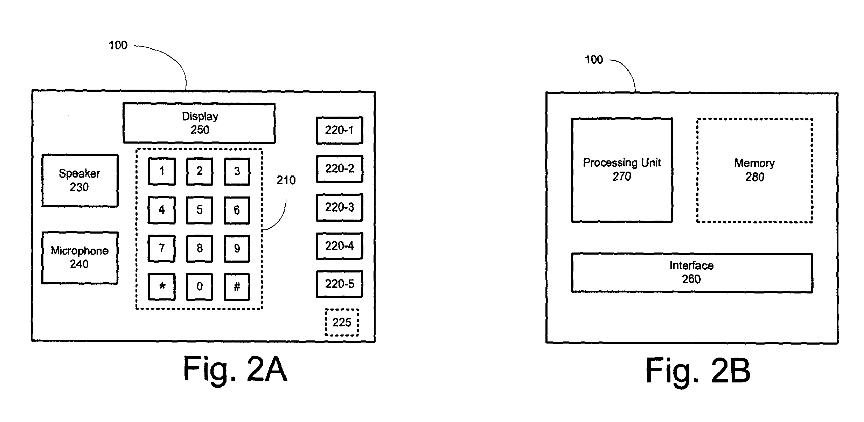

In one non-limiting embodiment, the central resource manager 110 comprises a PBX, and the resources 100 comprise telephonic devices, described in more detail below with reference to Figures 2A and 2B, the PBX being configured for managing the telephonic devices and enabling communication there between, and further configured for enabling communication with telephonic devices that are external to the centrally managed telephone system 50, as known to one of skill in the art. In a specific non-limiting example, the PBX comprises a Mitel 3300 IP Communications Platform from Mitel Networks Corporation, 350 Legget Drive, Kanata, Ontario, CANADA, K2K 2W7, which is directed towards managing resources communicating via IP-based communication networks. In these embodiments, the communications network 120 comprises a packet based network, and the resources 100 are enabled to communicate via a packet based network.

In some embodiments, a resource 100 may comprise a telephone, for example resources 100-1 through 100-5, while in other embodiments, a resource 100 may comprise a softphone installed as a communications application on a computing device, for example the resource 100-6. In any event, the resources 100 have some features in common, which are described now with respect to Figures 2A and 2B.

Figure 2A depicts a block diagram of components of a human-machine interface of a resource 100 according to a non-limiting embodiment. In this embodiment, the resource 100 comprises a telephonic device, however in other embodiments, the resource 100 may comprise a softphone application installed on a computing device (e.g. the resource 100-6). In any event, the resource 100 comprises a keyboard 210, potentially programmable keys (PPKs) 220, a speaker 230, a microphone 240 and an optional display 250. A user (not depicted) enters information into the resource 100 via the keyboard 210. In some embodiments, the user enters information into the resource 100 to log into the resource 100, or the central resource manager 110, for example in the case of hot desking (described below). In further embodiments, the user enters information into the resource 100 to configure the PPKs 220. In other embodiments, the user enters information into the resource 100 to initiate communication with other resources 100 in the communications network 120, or other resources available via the communications network 120, or other communications networks (i.e. the user makes a phone call). The user speaks to users of the other resources via the microphone 240 and listens to replies via the speaker 230, as known to one of skill in the art. The speaker 230 and the microphone 250 may be internal or external to the resource 100, as desired. Data which is transmitted or received at the resource 100 may be displayed on the optional display 250, for example a liquid crystal display (LCD).

The PPKs 220 comprise keys which may be potentially configured to perform certain functions when activated by the user. In embodiments where the resource 100 comprises a telephonic device, each PPK 220 may correspond to a physical key located on the telephonic device, which may be actuated by a user via a physical interaction (e.g. the user presses the physical key). In embodiments where the resource 100 comprises a softphone application, each PPK 220 may correspond to a soft key associated with the softphone application, which may be actuated by a user via an interaction with a user interface device coupled to the computing device running the softphone application (e.g. the user uses a mouse to move a cursor over the softkey, and activates the softkey by interacting with the mouse buttons). Alternatively, in these embodiments, each softkey may be associated with a physical key on the computing device, similar to that described above.

Each PPK 220 may potentially be configured to trigger activation of a feature of the system 50 or the resource 100 when activated. In some embodiments, each PPK 220 is associated with a feature, while in other embodiments, only a portion of the PPKs 220 is associated with a feature. Embodiments of the PPKs 220, configuring thereof, and associated features will be discussed in more detail below, however configuration data for each PPK 220 is generally stored at the memory 125 of the central resource manager 110, for example in the list 130, described below. In general, the resource 100 is configured to detect when a PPK has been activated and in response transmit a notification 102 (as depicted in Figure 1) to the central resource manager 110, the notification 102 comprising an identifier of the resource 100 and an identifier of the PPK 220 which has been activated. The notification 102 is enabled to trigger the feature of the system 50 or the resource 100.

In some embodiments, the resource 100 further comprises at least one page key 225. In these embodiments, each PPK 220 may be associated with more than one feature, each feature being accessible by activating the page key 225. For example, the PPKs 220, or a portion thereof, may be configured to trigger activation of a first set of features; when the page key 225 is activated once, the PPKs 220, or a portion thereof, are then configured to trigger activation of a second set of features. In some embodiments, the page key 225 may be activated a third, fourth, fifth time, etc., the PPKs 220 configured to activate a different set of features each time the page key 225 is activated. After a maximum number of activations, the PPKs 220 cycle back to the first set of features. Each set of features that may be triggered by the PPK 220 is known to one of skill in the art as a "page", and cycling through the sets of features is known to one of skill in the art as accessing various pages of keys.

In some embodiments, each PPK 220 may be further associated with a display (e.g. an LCD display), not depicted, for displaying labels which indicates the function each PPK 220 is configured to perform when activated, the labels being described below.

Attention is now directed to Figure 2B, which depicts a block diagram of communication and processing components of a resource 100, according to a non-limiting embodiment. In general, the components depicted in Figure 2B enable the components of the human-machine interface depicted in Figure 2A, and further enable the user of the resource 100 to communicate with users of other resources.

The resource 100 hence further comprises an interface 260 for enabling communication between the resource 100 and the communications network 120, the central resource manger 110 and other resources. The interface 260 accepts data from the user via the keyboard 210, the PPKs 220, the page key 225 (if present), and the microphone 240 for conveyance to the communications network 120, the central resource manager 110 and/or other resources, including the notification 102. The interface further accepts data from the communications network 120 for conveyance to the speaker 230 and/or the display 250 and/or displays associated with the PPKs 220, if present. The interface 260 may be wired or wireless as desired, and is generally compatible with the communications network 120. In one non-limiting example, the interface 160 is a packet-based interface for communications over a packet based network, such as the internet. In another non-limiting example, the interface 160 is a PSTN interface for communications over the PSTN.

In some embodiments, the resource 100 further comprises a processing unit 270 for processing data exchanged between the resource 100 and the communications network 120. In other embodiments, the resource 100 further comprises a memory 280 for storing data exchanged between the resource 100 and the communications network 120, for example labels to be displayed at the optional displays associated with each PPK 220, or user preference data (e.g. ring tone preferences etc.).

As described above, in some embodiments the resource 100 comprises a telephonic device, while in other embodiments, the resource 100 comprise a softphone application installed on a computing device. In any event, each resource 100 may comprise a different number of PPKs 220. For example, some resources 100 may comprise a single PPK 220, while other resources may comprise hundreds of PPKs 220. In embodiments where the resources 100 comprises a telephonic device, the number of functions accessible by activating the PPKs 220 is only limited by the number of PPKs 220 physically present on the telephonic device, and the number of pages of features associated with the optional page key 225. In embodiments where the resource 100 comprises a softphone application installed on a computing device, the number of functions accessible by activating the PPKs 220 is only limited by the number of PPKs 220 with which the softphone application has been configured. Furthermore, each resource 100 may only have a portion of the available PPKs 220 configured to perform a function. Hence, the memory required to store the configuration data of each resource 100 may vary widely from resource to resource.

The situation is further complicated by the practise known as hot desking, in which each resource 100 may have multiple users, and each user may be associated with a large number of virtual PPKs, the configuration data of each being assigned to the PPKs 220, when possible, when the each user logs into the resource 100.

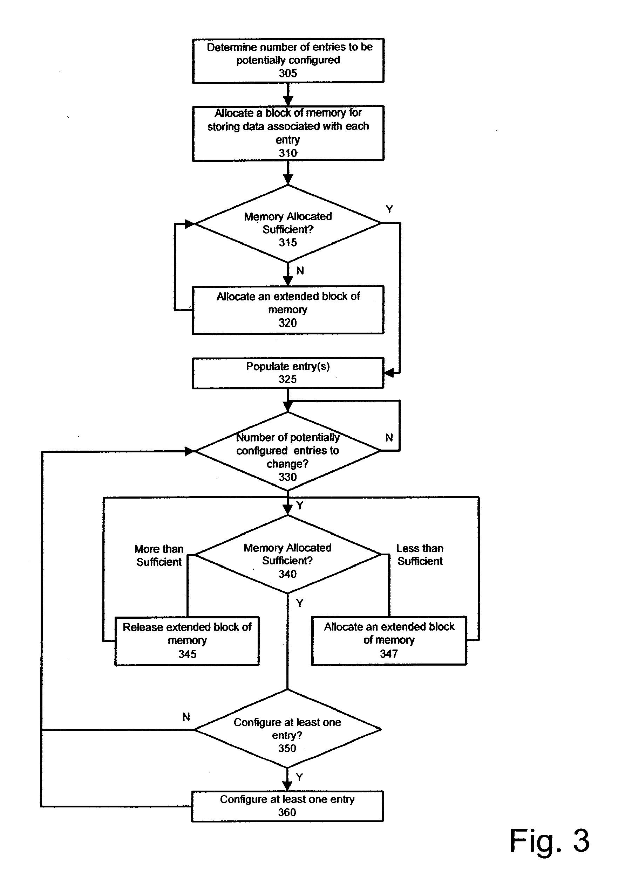

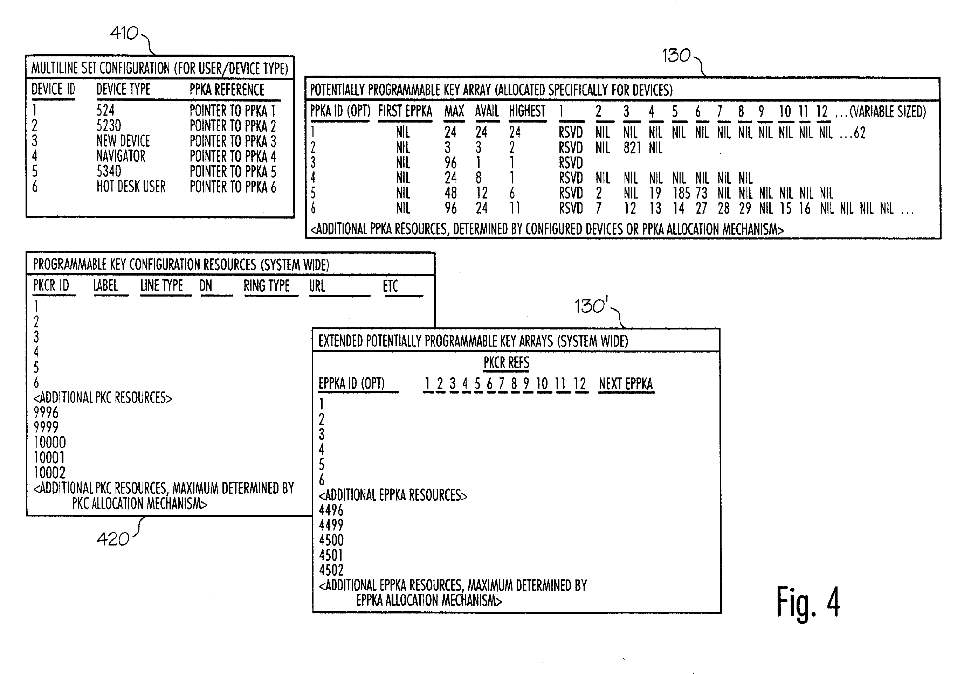

Turning now to Figure 4 which depicts a non-limiting embodiment of the list 130, and embodiments of other lists which may be stored in the memory 125, the list 130 comprises a plurality of entries, each entry associated with a resource 100. In the depicted embodiments, each entry is stored in a separate row, comprising a plurality of columns, each column for potentially storing data associated with the resource 100, and specifically for potentially storing configuration data of the PPKs 220 of the resource 100. Furthermore, each row corresponds to a portion of the memory 125 which has been allocated to potentially store configuration data for PPKs 220 of the resource 100, the allocation of memory described below with reference to Figure 3. In this embodiment, each row in the list 130 comprises columns labelled with an identifier "1" through "12", each column labelled 1 through 12 for potentially storing configuration data associated with a particular PPK 220 of the resource 100. The columns for potentially storing configuration data associated with a particular PPK 220 may generically be known as a PPK Array (PPKA), each of the columns in the PPKA for storing configuration data associated with the PPK 220 to which the column corresponds. The columns of the PPKA are generally labelled with identifiers of the PPKs 220 of the resources 100; hence, in this embodiment, the identifiers 1 through 12 correspond to identifiers of PPKS 220 1 through 12 on a resource 100, though other numbers of identifiers may be used in other embodiments. The PPKA array comprises an initial block of the memory 125 which is allocated for potentially storing configuration data of the PPKs 220 of the resource 100.

As will now be described, in non-limiting embodiments, configuration data may comprise an indication of programming data associated with a PPK 220, and/or an indication of an administrator and/or user preference associated with a PPK 220. In some embodiments an indication of an absence of programming data associated with a PPK 220 may also be stored at a column (i.e. the PPK 220 is not yet configured), however a PPK 220 which is not yet configured may then be potentially configured.

In some embodiments, one or more of the columns in the PPKA, in the list 130, may comprise an entry indicating a PPK 220 which is reserved from being programmed ("Rsvd"). In the depicted embodiment, each PPK 220 corresponding to the column labelled "1", of each resource 100, has been reserved. The reservation of a PPK 220 from being programmed may be set by an administrator of the system 50, for example so that the PPK 200 may temporarily be assigned a function at a later time by the administrator of the system 50, or dynamically be controlled by the central resource manager 110. In another non-limiting example, the PPK 220 (e.g. PPK 220-1 in Figure 2A) on the resource 100 may be assigned as the prime line of the resource 100 (with associated phone service for the resource 100). Another non-limiting example of a reserved PPK 220 is the assignment of a Voice First Video Conferencing application which directly uses a PPK 220 on the resource 100, regardless of associated system configuration. The PPK 220 is set to "Rsvd" to prevent configuration by a user or administrator (which would be invalid). This may be set by system software when appropriate.

In other embodiments, one or more of the columns in the PPKA, may comprise an entry indicating a PPK 220 which has not yet been configured, either by a user of the resource 100 or an administrator of the system 50, but which may be configured at a later time ("Nil"). In the depicted embodiment, PPK 220 corresponding to the columns labelled "3", and "7" through "12" of the resource 100 having a PPK ID of "5" are not configured (i.e. "Nil").

In other embodiments, one or more of the columns in the PPKA may comprise an indication of programming data associated with a PPK 220 associated with the column. In some embodiments, the indication of programming data may comprise the programming data. In a non-limiting example, the programming data may comprise a command or function (i.e. a "feature") which may be processed by the central resource manager 110 when the central resource manager 110 receives a notice from a resource 100 that a particular PPK 220 has been activated, e.g. by executing the command or calling the function, respectively. In other embodiments, the command (or function) may be transmitted to the resource 100 for processing by the processing unit 270.

In other embodiments, the indication of programming data may comprise a reference number associated with the programming data, the programming data being stored in a list 420 in association with the reference number, as in the depicted embodiment. For example, in the depicted embodiment, PPK 220 corresponding to the columns labelled "2" through "8", and "10" through "11" of the resource 100 having a PPK ID of "6" comprise reference numbers 7, 12, 13, 14, 27, 28, 29, 15 and 16, respectively, which are associated with programming data stored in the list 420.

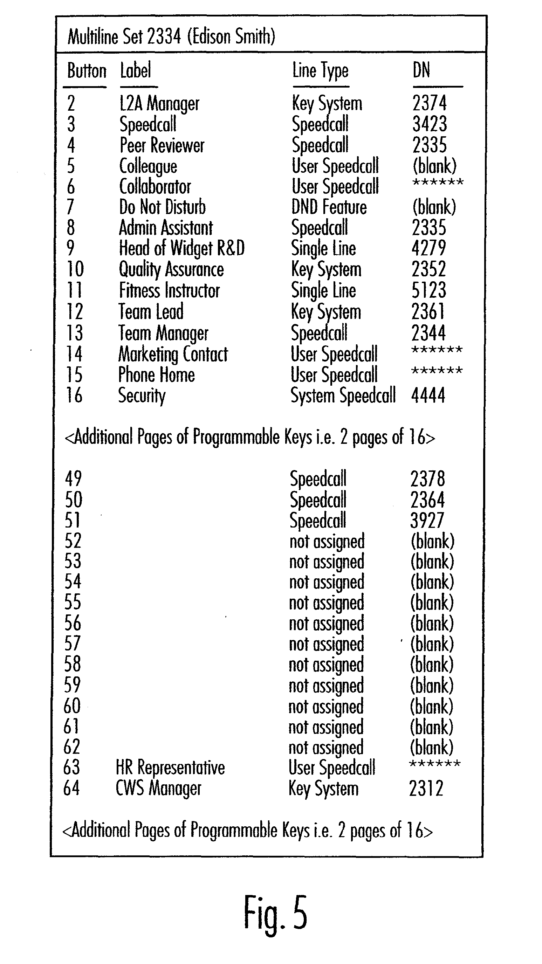

The list 420 comprises a plurality of entries, each entry associated with a different reference number. In the depicted embodiments, each entry is stored in a separate row, comprising a plurality of columns, each column for storing data associated with the reference number which with the row is associated. In some embodiments the list 420 may comprise a system wide list, comprising programming data for each PPK 220 on each resource 100 in the system 50. In other embodiments, the list 420 comprises programming data for a specific resource 100, the programming data for each resource 100 in the system 50 stored in a different list similar to the list 420. A particular non-limiting example of the list 420 is depicted in Figure 5, to which reference shall now be made, showing programming data for a particular resource 100,.

Each row in the embodiment of the list 420 depicted in Figure 5, comprises the reference number which with the row is associated (the column for storing the reference number being labelled "PKCR ID" (Programmable Key Configuration Resource Identification) in the non-limiting depicted embodiment). Each row in the list 420 further comprises an indication of the programming data of the PPK 220 with which the reference number in the list 130 is associated (the column for storing the programming data labelled "Line Type" in the non-limiting depicted embodiment), for example a command or function which may be processed by the central resource manager 110 or the resource 100, as described above. In particular non-limiting examples, the feature (i.e. command or function) may comprise "User Speedcall", "System Speedcall", "Speedcall", "Key System", "Singleline" and/or "DND (do not disturb) Feature". The available features are limited only by the features which have been made generally available to the system 50, for example by an administrator of the system 50. For example, the features may further comprise a forward feature, a hold feature, a ring tone feature, a transfer feature, a conference feature, a superkey feature (e.g. for gaining access to a menu structure for accessing further features), a menu feature, a handsfree feature for activating a handsfree microphone/speaker combination of a resource 100, an advisory messages feature, and a programming feature for allowing a user of the resource 100 to program the PPKs 220. In some embodiments, the features may further comprise commands and functions that are not provided by the system 50 (e.g. application features that are supported through communication with a service (not depicted) that is external to the system 50, and in communication with the system 50, via the communications network 120). Other commands or functions may occur to one of skill in the art.

In some embodiments, the "Line Type" column stores a portion of the programming data. For example, the programming data may comprise a feature which causes the resource 100 to be placed in communication with another resource having a particular directory number ("DN"), for example the "User Speedcall", "System Speedcall", "Speedcall", "Key System", "Singleline" features. In the depicted non-limiting embodiments the directory numbers are stored in a column labelled "DN". In these embodiments the directory number may be a directory number of a resource 100 within the system 50, or a directory number of a resource external to the system. In some embodiments, a PPK 220 may be programmed to potentially cause the resource 100 to be placed in communication with another resource, however the directory number may not initially be configured (e.g. "blank" is stored in the "DN" column).

In some embodiments, the reference number stored in the list 130 may be associated with data in the list 420 that indicates that the PPK 220 has not yet been configured, either by a user of the resource 100 or an administrator of the system 50, in an alternative to storing "Nil" in the list 130.

In some embodiments, the list 420 further comprises a label ("Label") associated with the reference number, which may be transmitted to the resource 100 for display on the optional displays associated with each PPK 220, as described above, for example when the resource 100 is registered at the central resource manager 110, when a PPK 220 is configured, or when a user logs into the resource 100. For example, the label may comprise the name of the feature stored in the "Line Type" column. In embodiments where the feature causes the resource 100 to be placed in communication with another resource having a particular directory number, the label may comprise the particular directory number, the name of a person associated with the resource and/or the particular directory number, or a role/job function of a person associated with the resource and/or the particular directory number. Other labels may occur to one of skill in the art, and are not particularly limited.

Returning now to the list 420 as depicted in Figure 4, the list 420 may further comprise a ring type associated with a reference number, for example to trigger the resource associated with a particular directory number to ring in a specific manner, or alternatively to trigger the resource 100 to ring in a specific manner when contacted by the resource associated with a particular directory number. In other embodiments, the list 420 may further comprise a URL associated with a reference number, such that when a PPK 220 associated with the reference number via list 130 is activated, the resource 100 is triggered to retrieve data from the URL. Other programming data which may be stored in the list 420 may occur to one of skill in the art.

In some embodiments, the list 130 is linked to a list 410, which may also be stored at the memory 125, or at a communication device in communication with the central resource manager 110 (for example a server that is configured to store system data, or a resource 100 that is further configured to act as a server for storing system data,). The list 410 comprises a plurality of entries, each entry comprising device data associated with a resource 100 in the system 50. In the depicted embodiments, each entry is stored in a separate row, comprising a plurality of columns, each column for storing device data associated with the resource 100.

In the illustrated non-limiting embodiment, each entry in the list 410 comprises a device ID for each resource 100 in the system 50, for example devices 100-1 through 100-6, an associated device type and an associated pointer to the PPKA in the list 130, pointers generally being known to one of skill in the art. In this embodiment, each of the associated pointers to a PPKA in the list 410 points to the corresponding row in the list 130 (i.e. the pointer in the first row of the list 410 points to the first row in the list 130 etc.). In some embodiments, the list 410 may further comprise data regarding the number of PPKs 220 associated with a resource 100. In other embodiments, the list 410 may further comprise a size of a block of the memory 125 that is to be initially allocated to the resource 100, as described below. In yet further embodiments, the list 410 may comprise a directory number associated with the resource 100 (e.g. a telephone number and/or an IP address). In yet further embodiments, the list 410 may comprise the name of the user associated with the resource 100. However, in embodiments where the resource 100 comprises a hot desk (i.e. a virtual resource associated with a user), the name of the user may be stored in association with the device type as a "Hot Desk User", for example "Hot Desk User Bob Smith", or "Bob Smith".

Returning to the list 130, each entry in the list 130 may further comprise an optional PPK ID, which in some embodiments may be similar to the device ID described above with reference to the list 410, while in other embodiments the PPK ID may be similar to the device type, the directory number and/or the name of the user of the list 410. Each entry in the list 130 may further comprise a maximum number of PPKs 220 associated with the resource 100 ("Max"), for example the maximum number of physical keys and/or the maximum number of soft keys. Each entry in the list 130 may further comprise the number of available PPKs 220 that are associated with resource 100 ("Avail"), for example a subset of the PPKs 220 that an administrator has made available to a user.

Each entry in the list 130 may further comprise an identifier of the highest PPK 220 which has been programmed ("Highest"). For example, as described above, each column labelled 1 through 12 corresponds to, and identifies, a PPK 220 on the resource 100. Hence, if the PPK 220 which corresponds to column 11 is programmed, but PPKs 220 corresponding to columns labelled 12 (or higher) are not programmed, "Highest" would comprise "11". In these embodiments, some, all, or none of the PPKs 220 corresponding to columns labelled 10 or lower may be programmed, as desired. The value of "Highest" is not limited by the number of columns in the list 130, as will be described below. In embodiments which comprise an identifier of the highest PPK 220 which has been programmed, "Highest" may be dynamically determined as the PPKs 220 are configured, as described below. In general, "Highest" tells the central resource manager 110 how many columns of the list 130 that need to be processed to determine the state of a particular resource 110.

Each entry in the list 130 further comprises at least one field for storing a pointer to at least one extended programmable key array (EPPKA) stored, for example, in a list 130' depicted in Figure 4. In some embodiments, the block of the memory 125 allocated to potentially store the configuration data (i.e. the PPKA) may not be sufficient for storing all the configuration data of PPKs 220 of a particular resource 100, for example if the resource 100 has a large number of PPKs 220 or many pages. In these embodiments, an extended block of the memory 125 may be allocated for potentially storing the additional configuration data, described hereafter with reference to Figure 3. The additional configuration data is potentially stored in an EPPKA which, in a particular non-limiting example, comprises columns labelled with identifiers "1" through "12", each column corresponding to a PPK 220 associated with a resource 100 for potentially storing the additional configuration data, similar to that described above. Alternatively, the identifiers of the columns in the EPPKA may be labelled consecutively with the identifiers of the columns of the PPKA (e.g. 13 through 24). In other words, if the list 130 is configured to store configuration data for twelve PPKs 220 for each resource 130, and a resource 100 comprises more than twelve PPKs 220, or more than twelve PPKs 220 that are configured, the configuration data for the next twelve PPKs 220 may be stored in a row in the list 130'. Additional rows of the list 130', or another similar list, (i.e. additional extended blocks of the memory 125) may be allocated for storing the additional configuration data as required. In these embodiments, each entry may further comprise a pointer ("Next EPPKA") to a next extended block of the memory 125 (e.g. another row of the list 130' or a row of another list).

The list 130' may further comprise an optional EPPKA ID, similar to the PPK ID described above.

Hence, when a user activates a PPK 220 at a resource 100, the resource 100 transmits the notification 102 to the central resource manager 110, the central resource manager 110 then processes the notification 102 to extract the identifier of the PPK 220 which has been activated, and the identifier of the resource 100. In embodiments which comprise the list 410, the identifier of the resource 100 is compared to the device ID, or alternatively the directory number, to determine the pointer to the PPKA associated with the resource 100. Alternatively, the identifier of the resource 100 is compared to the optional PPK ID of the list 130. In any event, the PPKA associated with the resource 100 is located in the memory 125, and the identifier of the PPK 220 which has been activated is compared to the identifiers of the columns in the PPKA. If identifiers of the columns in the PPKA comprise the identifier of the activated PPK 220, the associated feature is identified by locating the indication of the programming data in the PPKA via matching the identifier of the activated PPK 220 with the identifier of the column in the PPKA. The indication of the programming data is then processed to identify the feature (or lack thereof) associated with the activated PPK 220. In embodiments that include the list 420, the reference number may be used to identify the feature in the list 420. In any event, the feature is then implemented by processing the associated programming data (i.e. a function or a command) at the processing unit 140, or by transmitting the programming data to the resource for processing at the processing unit 270.

If identifiers of the columns in the PPKA do not comprise the identifier of the activated PPK 220, (i.e. the identifier of the activated PPK 220 is higher than 12, in the depicted embodiment), the list 130' is then consulted by processing the pointer to the first EPPKA to determine the location of the first EPPKA in the list 130'. If the identifiers of the columns in the first EPPKA are labelled consecutively with the identifiers of the columns of the PPKA, and the identifier of the activated PPK 220 is between 13 and 24, in the depicted embodiment, the associated feature is identified by locating the indication of the programming data in the first EPPKA via matching the identifier of the activated PPK 220 with the identifier of the column in the first EPPKA. Alternatively, if the identifiers of the columns in the first EPPKA are not labelled consecutively with the identifiers of the columns of the PPKA (i.e. the first EPPKA column labelling starts at "1"), the identifier of the activated PPK 220 is processed to subtract the highest identifier of the columns in the PPKA to bring the identifier within the range of the identifiers of the columns in the first EPPKA (i.e. subtract 12). However, if identifiers of the columns in the first EPPKA do not comprise the identifier of the activated PPK 220, (i.e. the identifier of the activated PPK 220 is higher than 12, in the depicted embodiment), the next EPPKA is then located via the pointer to the next EPPKA stored in the list 130'. This process continues until the programming data associated with the activated PPK 220 is located, and subsequently processed, as described above.

As the configuration for each PPK 220 is managed via the central resource manager 110, it is advantageous to provide a method for managing the memory 125 to ensure that unnecessary amounts of the memory 125 are not allocated to store configuration data for PPKs which are either not present on the resource 100 or not yet configured. Hence, attention is now directed to Figure 3, which depicts a method of managing the memory 125 of the central resource manager 110, the memory 125 for storing potentially configurable entries in the list 130 associated with a resource 100 coupled to the central resource manager 110. The method of Figure 3 may be performed at the processing unit 140 in communication with the memory 125. Steps 305 through 325 represent a provisioning process, while steps 330 through 360 represent a monitoring and update process. Further reference will be made to Figures 4 and 5, described above, to illustrate the method of Figure 3.

At step 305, the number of entries in the list 130 to be potentially configured is determined. In some embodiments, when the resource 100 initially communicates with the central resource manager 110 via the communications network 120, the resource 100 is enabled to register with the central resource manager 110, and the PPKA associated with the resource 100 in the list 130 is initially populated. In these embodiments, the number of PPKs 220 associated with the resource 100 may be determined by identifying the resource 100 in a list of device types (for example the list 410 may be a generic list of device types or a combination), which includes associated device data. The "Max" column in the list 130 may be populated using this data. Further, an administrator of the system 50 may have set the number of available PPKs 220 for the device type in the same list, and the "Avail" column may be populated using this data. In some embodiments, the administrator may further have logged preference for the configuration of the PPKs 220 for the device type in the same list (i.e. the PPKs 220 are configured by an administrator), and the processing unit 140 determines how each PPK 220 of the resource 100 is to be configured using the administrator preferences.

In other embodiments, when the resource 100 is initially coupled to the central resource manager 110, the PPKs 220 of the resource 100 may be initially provisioned by a user by interacting with the keyboard 210 and the PPKs 220, the user assigning features to at least a portion of the PPKs 220 (i.e. configured by a user). In these embodiments, the resource 100 is enabled to provide the user with choices of features, either by having had the choice of features stored in the memory 280 via a factory setting (or alternatively, provisioned by an administrator of the system 50 prior to providing the resource 100 to the user), or by requesting a list of available features from the central resource manager 110. The available features may be displayed on the display 250. The user preferences of features that are to be assigned to the at least a portion of the PPKs 220 are transmitted to the central resource manager 110 during this provisioning process.

In any event, the central resource manager 110 determines how many PPKs 220 are associated with the resource 100. The central resource manager 110 also determines the initial administrator preferences and/or the initial user preferences. The number of PPKs 220 associated with the resource 100, and the initial preference of the administrator and/or the user are then used to determine the number of PPKs 220 that are initially in use on the resource 100. The number of PPKs 220 that may be potentially configured by the user and/or the administrator is also determined. For example, if a resource 100 comprises X number of PPKs 220, the PPK Y may initially be configured, 1<Y≤X. The initial number of PPKs 220 that may then be potentially configured is not 1, then, but Y. In other words, a portion of the memory 125 must be allocated for saving configuration data associated with Y PPKs. For some resources 100, this portion may be large, while for other resources this portion may be small.

At step 310, an initial block of the memory 125 for storing data associated with each entry in the list 130 is allocated, to potentially store configuration data for the Y PPKs 220, regardless of the number of PPKs 220 on the resource 100 and further regardless of the number of PPKs 220 which have been configured on the resource 100. However, the size of the block of the memory 125 that is initially allocated to a resource 100 is not particularly limited, and furthermore, the size of the block of the memory 125 that is initially allocated to a resource 100 may vary depending on the resource 100. For example, the size of the block of the memory 125 that is initially allocated to a resource 100 may vary depending on the number of physical keys on the resource 100 and/or the number of pages available to the resource 100. The size of the initial block of the memory 125 that is allocated to the resource 100 may be set by the administrator of the system 50, for example in the list of device types. The initial block of the memory 125 is embodied in the PPKA within the list 130, as described above.

At step 315 it is determined if the initial block of the memory 125 allocated is sufficient. If the initial block of the memory 125 allocated is insufficient for potentially storing the configuration data associated with the PPKs 220, at step 320 an extended block of the memory 320 is allocated to potentially store the configuration data. The extended block of the memory 125 is embodied in the first EPPKA within the list 130', as described above. Step 315 is then repeated to determine if the initial block of the memory 125 and the extended block of the memory 125 allocated for potentially storing the configuration data associated with the PPKs 220 is sufficient. If not, at step 320 another extended block of memory 125 is allocated, as embodied in the next EPPKA, as described above.

This process continues until the memory allocated is sufficient, at which point the entries in the list 130 (and the list 130' if necessary), are populated (at step 325) using the user preference and/or the administrator preferences and/or the initial configuration data stored in the list of device types. Alternatively, the population of the entries of the list 130 (and the list 130'), may occur whenever a new block of memory 125 is allocated for potentially storing the configuration data. During the population process, the "Highest" column of the list 130 is populated, as is the list 420, if present, the association between reference numbers and features being performed dynamically by the central resource manager 110.

At step 330, the central resource manager 110 monitors changes in the user preferences and/or administrator preferences to determine if the number of potentially configured entries in the list 130 and/or the list 130' are to change. This may occur via a user of the resource 100 assigning features to or removing features from at least a portion of the PPKs 220. In some embodiments, this may occur via a user of the resource 100 creating or removing pages of keys. The resource 100 will, in response, transmit the changes to the central resource manager 110 for processing. Alternatively, the administrator of the system 50 may further assign features to or remove features from at least a portion of the PPKs 220, either for the specific resource 100, for all resources 100, or for all resources 100 that are of a specific device type.

If the number of entries changes, then the central resource manager determines at step 340 if the memory that is currently allocated is still sufficient. If the memory allocated is less than sufficient (i.e. features have been associated with PPKs 220 having a higher identification number than the highest PPK 220 for which memory has currently been allocated), an extended block of the memory 125 is allocated at step 347. At step 340 it is again determined if the memory that has now been allocated is sufficient, and another extended block of memory 125 may be allocated at step 347 if required. This process continues until the memory allocated is sufficient.

On the other hand, if the memory allocated is more than sufficient (e.g. features have been removed from PPKs 220 and the memory currently allocated is no longer required to store all the configuration data), an extended block of the memory 125 is released from storing configuration data, at step 345. The extended block of memory 125 is then returned to a general pool of the memory 125 for use in other processes by the central resource manager 110. In other words, extended block of memory 125 is de- allocated for storing configuration data if the extended block of memory 125 is no longer required to store the configuration data. At step 340, it is again determined if the memory that is currently allocated is more than sufficient and another extended block of memory 125 may be released at step 345. This process continues until the memory allocated is sufficient.

In some embodiments, allocation (at step 347) and de-allocation (at step 345) of an extended block of the memory 125, may be performed directly. For example, the address of each extended block of the memory 125 that is being allocated or de-allocated may be tracked by the processing unit 140. In other embodiments, however, allocation (at step 347) and de-allocation (at step 345) of an extended block of the memory 125, may be performed indirectly. For example, by marking blocks of the memory 125 as allocated or de-allocated in a pre-allocated pool of the memory 125. In this embodiment, the address of each extended block of the memory 125 is not directly tracked, but rather a table (for example) is updated to record and reflect which blocks of the memory 125 from the pre-allocated pool are allocated or deallocated.

At step 350 it is determined if at least one entry is to be configured. In some embodiments, when it is determined at step 330 that the number of potentially configured entries is to increase, at least one of the added PPKs 220, or the existing PPKs 220, may be associated with features and the new configuration data must be stored in the PPKA or an EPPKA. If the number of entries is to decrease, at least one of the remaining PPKs 220 may be configured (including reconfigured), in parallel with changing the number of entries. If so, at step 360, the at least one entry is configured, similar to the population of entries described above with reference to step 325. If not, the central resource manager 110 continues to monitor changes in the number of potentially configured entries, at step 330.

In this manner, the central resource manager 110 is enabled to allocate only enough of the memory 125 to each resource 110, that is sufficient to potentially store the configuration data associated with the PPKs 220 of the resource, freeing up the memory 125 for other processes occurring at the central resource manager 110.

While embodiments have been described with reference to a centrally managed system, such as a telephony system, the method of managing the memory 125, described with reference to Figure 3, may be applied to other systems that comprise a potentially sparsely populated list of potentially configurable entries, where the number of entries in the potentially sparsely populated list is a property of a physical characteristic/user preference/virtual representation etc. of a device.

Those skilled in the art will appreciate that in some embodiments, the functionality of the central resource manager 110 and the resources 100 may be implemented using pre-programmed hardware or firmware elements (e.g., application specific integrated circuits (ASICs), electrically erasable programmable read-only memories (EEPROMs), etc.), or other related components. In other embodiments, the functionality of the central resource manager 110 and the resources 100 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of managing a memory for storing potentially configurable entries in a list associated with a resource coupled to a central resource manager, comprising,
determining a number of potentially configurable entries in the list;
allocating a block of memory for storing data associated with each potentially configurable entry, said block of memory allocated from the memory; and
if said block of memory is insufficient for storing said data, allocating at least one extended block of memory, from the memory, for storing said data.

2. The method of claim 1, further comprising:
de-allocating said at least one extended block of memory in the memory if a total number of potentially configurable entries decreases and, consequently, said at least one extended block of memory is no longer required to store said data; and/or
allocating at least one additional extended block of memory from the memory for storing said data, if a total number of potentially configurable entries increases and, consequently, said at least one extended block of memory is no longer sufficient to store said data.

3. The method of claim 1 or 2, further comprising configuring at least one of the potentially configurable entries.

4. A central resource manager for managing potentially configurable entries in a list associated with a resource coupled to the central resource manager, comprising:
a memory for storing the potentially configurable entries in the list;
a processing unit enabled for:
determining a number of potentially configurable entries in the list;
allocating a block of memory for storing data associated with each potentially configurable entry, said block of memory allocated from said memory; and
if said block of memory is insufficient for storing said data, allocating at least one extended block of memory, from said memory, for storing said data.

5. The central resource manager of claim 4, said processor being further enabled for de-allocating said at least one extended block of memory in said memory if a total number of potentially configurable entries decreases and, consequently, said at least one extended block of memory is no longer required to store said data.

6. The central resource manager of claim 4 or 5, said processor being further enabled for allocating at least one additional extended block of memory from said memory, for storing said data, if a total number of potentially configurable entries increases and, consequently, said at least one extended block of memory is no longer sufficient to store said data.

7. The central resource manager of claim 4, 5 or 6, said processor being further enabled for configuring at least one of the potentially configurable entries.

8. A method according to claim 3 or a central resource manager according to claim 7, wherein configuring at least one of the potentially configurable entries comprises storing an indication of programming data in association with said at least one potentially configurable entry.

9. A method according to claim 8 or a central resource manager according to claim 8, wherein said indication of programming data comprises said programming data.

10. A method according to claim 8 or a central resource manager according to claim 8, wherein said indication of programming data comprises a reference number, said reference number being stored in association with said programming data.

11. A method according to claim 10, comprising retrieving said programming data using said reference number.

12. A central resource manager according to claim 10, wherein said processor is enabled for retrieving said programming data using said reference number.

13. A method according to claim 8, further comprising retrieving said programming data in response to receiving a notification that a key associated with an entry in the list has been activated at the resource, and processing said programming data.

14. A central resource manager according to claim 8, said processor being further enabled for retrieving said programming data in response to receiving a notification that a key associated with an entry in the list has been activated at the resource, and processing said programming data.

15. A method according to claim 13 or a central resource manager according to claim 14, wherein processing programming data comprises transmitting said programming data to said resource for processing.
